# NEW EUROPEAN PATENT SPECIFICATION

(11) **EP 2 143 628 B2**
(45) Date of publication and mention of the opposition decision: **01.08.2018**
(45) Mention of the grant of the patent: 12.03.2014
(21) Application number: 07740080.2
(22) Date of filing: 28.03.2007
(51) Int. Cl.: B62M 23/02, B62M 6/55

(54) **ELECTRICALLY ASSISTED BICYCLE AND UNIT ADAPTED FOR USE IN ELECTRICALLY ASSISTED BICYCLE AND CAPABLE OF BEING ATTACHED TO BICYCLE BODY FRAME**
ELEKTRISCH UNTERSTÜTZTES FAHRRAD UND ZUR VERWENDUNG IN EINEM ELEKTRISCH UNTERSTÜTZTEN FAHRRAD AUSGEFÜHRTE EINHEIT, DIE AM FAHRRADKÖRPERRAHMEN BEFESTIGT WERDEN KANN
BICYCLETTE SEMI-ELECTRIQUE ET APPAREIL ADAPTE A L'UTILISATION DANS UNE BICYCLETTE SEMI-ELECTRIQUE ET POUVANT ETRE FIXE AU CADRE DE LA BICYCLETTE

(43) Date of publication of application: 13.01.2010
(73) Proprietor: Bafang Electric (Suzhou) Co., Ltd., 215122 Suzhou (CN)
(72) Inventor: YOSHIIE, Akihito, Takatsuki-shi Osaka 569-1195 (JP); KANATA, Takeshi, Takatsuki-shi Osaka 569-1195 (JP)
(74) Representative: Sun, Yiming
(86) International application number: PCT/JP2007/056642
(87) International publication number: WO 2008/120311

(56) References cited:
- EP-A2- 1 110 856
- EP-A2- 1 306 297
- CH-A- 241 133
- CH-A5- 593 822
- CN-Y- 2 300 584
- CN-Y- 2 817 193
- DE-A1- 10 134 820
- DE-C1- 10 215 964
- DE-C2- 3 826 386
- DE-T2- 69 609 929
- DE-U1- 9 407 684
- GB-A- 2 249 529
- JP-A- 08 156 870
- JP-A- 08 207 873
- JP-A- 2002 362 468
- JP-A- 2004 001 735
- JP-A- 2006 103 474
- JP-A- 2007 091 159
- JP-Y2- 61 046 079
- US-A- 4 603 754
- US-A- 5 749 429
- US-A- 6 080 073
- US-A- 6 152 249
- US-A1- 2005 077 096
- US-A1- 2005 167 226
- http://jp.sunstar.com/company/press/2006/11 17.html

## Description

### TECHNICAL FIELD

The present invention relates to a power-assisted bicycle which can travel with a pedaling force supplemented with an electromotive power and also to a unit for a power-assisted bicycle attachable to a body frame of a bicycle.

### BACKGROUND ART

The power-assisted bicycle that can travel with a pedaling force supplemented with an electromotive power is typically provided with a force combining mechanism for combining the pedaling force with the electromotive power. To give an example of such a force combining mechanism, there has been developed one type of power-assisted bicycle equipped with a force combining mechanism as disclosed in Japanese Patent Laid-open Publication No. 2002-362468. This power-assisted bicycle comprises: a sprocket 2 which is rotatable to transmit a pedaling force to a driving wheel; an assist-gear 30 which is rotatable coaxially with the sprocket 2; a drive unit operable to output an electromotive power in response to the pedaling force under a predetermined condition; a power sprocket 33 which is rotationally driven by the output electromotive power; and an assist-chain 32 extending across the assist-gear 30 and the power sprocket 33, as illustrated in Fig. 3 of the above-cited Patent Publication. This technology has provided an advantage of significantly increased flexibility in installation of the force combining mechanism, indeed eliminating the need for a special frame for the installation thereof.

US 2005/0167226 discloses a power-assisted bicycle with a one-way clutch that can also be used as a torque detection means. The document US 2005/0167226 discloses the closest priort art.

US 5,749,429 discloses a power assist apparatus of a power assisted bicycle that comprises a crank shaft to be driven for rotation by a pedalling force, an electric motor for generating an assisting power, a force composition device for composing the pedalling force and the assisting force thereof to a driving wheel side and at the same time for generating two thrust component forces having magnitude proportional to pedalling force and assisting power, a thrust component force magnitude difference detector for detecting the difference in magnitude between the two thrust component forces, and a controller for controlling an output of the electric motor so as to bring the difference in magnitude to "0" and to an optional magnitude difference based on an input from the thrust component force magnitude detector.

EP 1,306,297 provides a power unit for a motor-assisted bicycle in which an electrically assisting motor is mounted on a casing supported by a body frame while rotatably supporting a crank shaft having on both ends therefor crank pedals.

US 6,152249 presents an electric power-assisted bicycle wherein an electric-driving device is composed of a flat motor installed in a shell and harmonic reducer; the shell body and a storage battery are fixed in the middle of the frame; a centre shaft crosses the flat motor and the harmonic reducer, and can rotate relative to them; and the flat motor is connected with a power-transmitting device through the harmonic reducer.

JP2004-001735 discloses a drive-force assistance device comprising a fixing member fixed on a man-power drive spindle; a rotation member coupled with the fixing member through an elastic element and rotating the man-power drive spindle; a moving element moved in the axial direction of the man-power drive spindle guided by a guide groove formed in the rotation member as it is rotated together with the fixing member; and a detecting element to detect an amount of movement in an axial direction of the moving element.

### DISCLOSURE OF THE INVENTION

### PROBLEMS TO BE SOLVED BY THE INVENTION

However, the force combining mechanism according to the prior art as stated above, in which a main component of a pedaling force sensor and an auxiliary driving unit are provided as structurally separate units, still has a room for improvement in constructing a simplified mechanism and easier installation of the same mechanism to the body frame. The present invention has been made in the context stated above, and thus an object thereof is to provide a simplified power assisting mechanism useful in the power-assisted bicycle and to facilitate the installation of the same mechanism to the bicycle body frame.

### MEANS FOR SOLVING THE PROBLEMS

To solve the problem as pointed above, an aspect of the present invention is directed to a unit for a power-assisted bicycle attachable to a body frame of a bicycle according to claim 1.

According to another aspect, the present invention provides a power-assisted bicycle which can travel with a pedaling force supplemented with an electromotive power, comprising said unit. Preferably, the power-assisted bicycle of the present invention may comprise an elastic member disposed intermediately on a motive power transmission path of the assist-gear, the coupler means and the sprocket. For example, the elastic member may be disposed at an engagement region where at least either one of the sprocket and the assist-gear can engage with a pin. Preferably, the assist-gear may be supported for rotational movement via a bearing independently from the sprocket.

According to the present invention, as the electromotive power output means provides an output of an electromotive power in response to a pedaling force under a predetermined condition, the electromotive power can be transmitted via the gear mechanism to the assist-gear so as to drive said assist-gear to rotate. The electromotive power transmitted to the assist-gear is further transmitted via the coupler means to the sprocket. The sprocket can transmit a combined force of the pedaling force with the electromotive power to the driving wheel.

According to the present invention, the electromotive power output means and the gear mechanism are fixedly mounted on a common base, while the sprocket and the assist-gear are rotationally mounted to the common base. According to this, the electromotive power output means and the force combining mechanism can be integrally incorporated in a single unit, thereby facilitating the installation of the unit to the body frame. In addition, the unit can be installed to the any types of body frame in a more flexible manner by adaptively modifying the common base.

Preferably, the electromotive power output means and at least a part of the gear mechanism are accommodated in a housing, and the housing is joined to or formed integrally with the common base.

The gear mechanism comprises a first gear which can operate associatively with the output shaft of the electromotive power output means; a second gear for speed reduction which can mate with the first gear; and a third gear which is coupled coaxially with the second gear and can mate with the assist-gear.

As stated above, since embodiments of the present invention allow for the motive power transmission to be achieved from the assist-gear to the sprocket by way of the pin, therefore the number of parts can be reduced, which helps simplify the mechanism, and further achieve the structure directed for the easier installation to the body frame. In addition, since the elastic member may be disposed intermediately on the motive power transmission path of the assist-gear, the coupler means and the sprocket, therefore a significantly smooth motive power transmission can be achieved.

In addition, a power-assisted bicycle according to another mode of the present invention further comprises a drive shaft which can rotate by application of the pedaling force, wherein the drive shaft is rotatably supported on the common base. In this aspect, the drive shaft is accommodated in a shaft housing, which is preferably joined to or formed integrally with the common base. In this case, the body frame of the power-assisted bicycle may preferably have a shaft aperture through which the shaft housing extends. That is, the shaft housing may be configured so as to extend through the shaft aperture formed in the power-assisted bicycle. This arrangement allowing for the shaft housing extending through the shaft aperture can facilitate the attaching and detaching of the integral unit consisting of the electromotive power output means and the force combining mechanism to/from the body frame.

Further, in a power-assisted bicycle according to yet another mode of the present invention, the sprocket is mounted to the drive shaft via a one-way clutch, which is operable to transmit only a rotational movement in one direction by a pedaling force applied to the drive shaft to the sprocket. In this mode, preferably, the power-assisted bicycle may comprise a detection means for determining a physical quantity for the one-way clutch varying in response to the pedaling force, and a control means for controlling the electromotive power based on at least the physical quantity determined by the detection means. This arrangement allows not only the electromotive power output means and the force combining means but also the pedaling force detection means are, as a whole in a simple mechanism, incorporated within a single unit.

On the other hand, the assist-gear may be preferably mounted to the common base via a bearing for rotational movement. This arrangement allows the electromotive power to be transmitted to the sprocket in a stable manner.

These and other objects and advantages of the present invention will be understood more clearly by making a reference to a preferred embodiment of the present invention as described below.

### BRIEF DESCRIPTION OF THE DRAWINGS

Fig. 1 is a schematic view of a power-assisted bicycle according to the present invention;
Fig. 2 is a schematic diagram illustrating a control system of a power-assisted bicycle of the present invention;
Fig. 3 is an illustration of a unit to be mounted to a power-assisted bicycle according to one embodiment of the present invention, wherein (a) shows a side elevational view and (b) shows a cross sectional view of the unit, respectively;

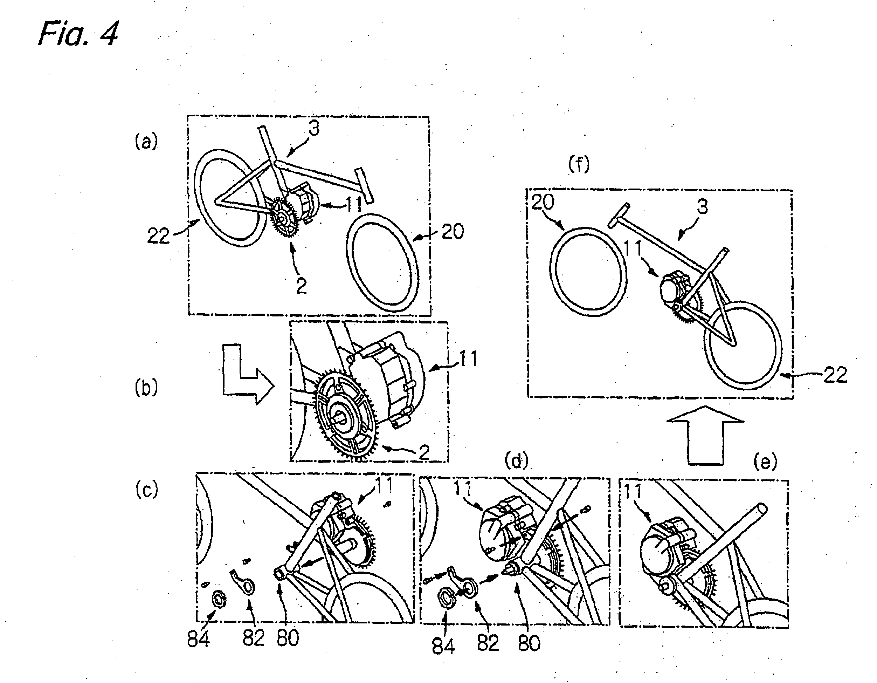

Fig. 4 is a schematic drawing for illustrating sequential steps of a procedure for installing a unit according to one embodiment of the present invention to a bicycle body frame, wherein (a) shows a perspective view of the unit having been installed to the bicycle body frame, as viewed from the right; (b) is an enlarged view of the unit as shown in Fig. 4(a); (c) is a perspective view of the unit before installation to the bicycle body frame; (d) is a perspective view of the unit with a part thereof having been fitted in the bicycle body frame; (e) is a perspective view of the unit that has been fixed to the bicycle body frame; and (f) shows a perspective view of the unit having been installed to the bicycle body frame, as viewed from the left, respectively;
Fig. 5 is an exploded perspective view of a one-way clutch as shown in Fig. 3;
Fig. 6 is a diagram showing a mating condition between a tooth and a pawl of a one-way clutch (ratchet gear) for illustrating a principle of pedaling force detection in a power-assisted bicycle of the present invention; and
Fig. 7 presents examples of an anti-rotation means for preventing a relative rotation of a pawl with respect to a drive shaft, wherein Fig. 7(a) is a top view illustrating a general configuration of a ball spline type, Fig. 7(b) a spline key type and Fig. 7(c) a key slot type, respectively.

### EXPLANATION OF THE REFERENCE NUMERALS

- 1: Power-assisted bicycle
- 2: Sprocket
- 4: Drive shaft
- 11: Unit
- 12: Chain
- 13: Drive housing
- 14: Microcomputer
- 15: Amplifying circuit
- 17: Battery
- 22: Driving wheel (rear wheel)
- 30: Assist-gear
- 37: Electric motor
- 37a: Output shaft of the electric motor
- 38: First gear
- 40: Gear mechanism
- 42: Second gear
- 45: Third gear
- 50: Common base
- 52: Shaft housing
- 70: Bearing
- 80: Shaft aperture
- 99: One-way clutch
- 100: Pawl block
- 102: Ratchet pawl
- 112: Tooth block
- 114: Ratchet tooth
- 123: Pin
- 124: Coned disc spring
- 126: Strain gauge
- 129: Elastic member

### EMBODIMENT OF THE INVENTION

A preferred embodiment of the present invention will be described below with reference to the attached drawings.

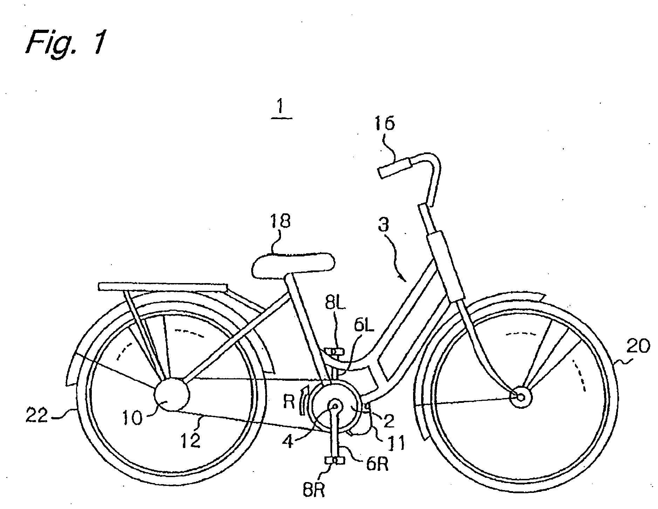

Fig. 1 shows generally a power-assisted bicycle 1 according to a first embodiment of the present invention. As illustrated, this power-assisted bicycle 1, similarly to ordinary bicycles, has a main skeletal structure comprising a body frame 3 made of metallic tubes, to which body frame 3 is mounted a front wheel 20, a rear wheel 22, a steering handle 16, a saddle 18 and others in a known configuration.

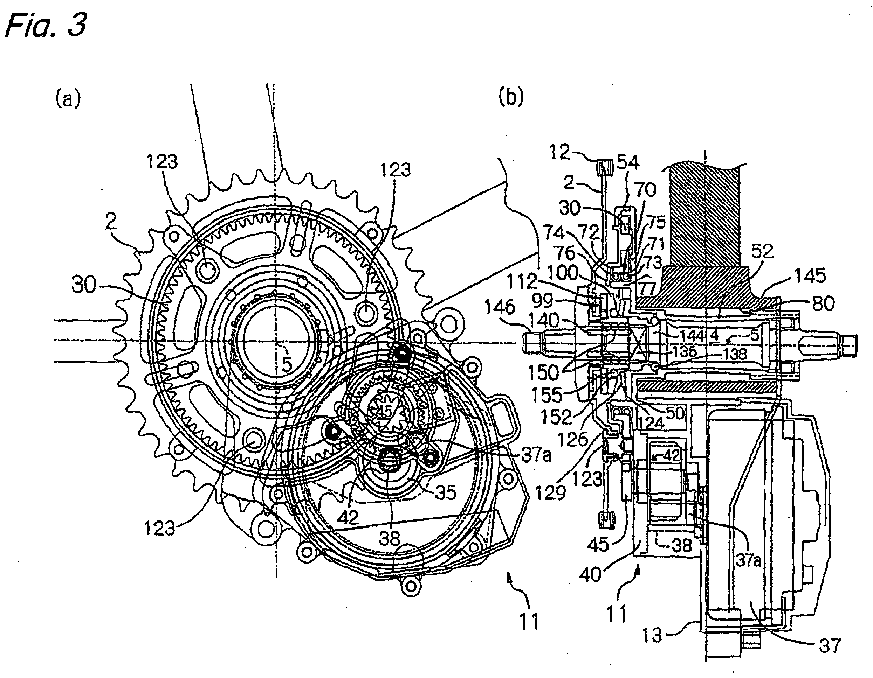

Further, a drive shaft 4 is supported in a lower middle portion of the body frame 3 so as to be rotatable, and pedals 8L, 8R are mounted in a left and a right ends of the shaft 4 via crank bars 6L, 6R, respectively. To this drive shaft 4 is concentrically mounted a sprocket 2 via a one-way clutch (as will be described later and designated by 99 in Fig. 3) operable to transmit only a rotational movement in the R direction corresponding to a forward travelling direction of the bicycle body. An endless rotating chain 12 is extending across the sprocket 2 and a rear wheel drive mechanism 10 disposed in the center of the rear wheel 22.

The power-assisted bicycle 1 in the illustrated embodiment controls the bicycle so as to assist a pedaling force based on an assist ratio (auxiliary power/pedaling force) as determined from at least the bicycle travelling speed and the pedaling force. In this embodiment, the control of the power-assisted bicycle and the force combining operation of the electromotive power with the pedaling force can be executed by a unit 11 provided as a power assisting mechanism.

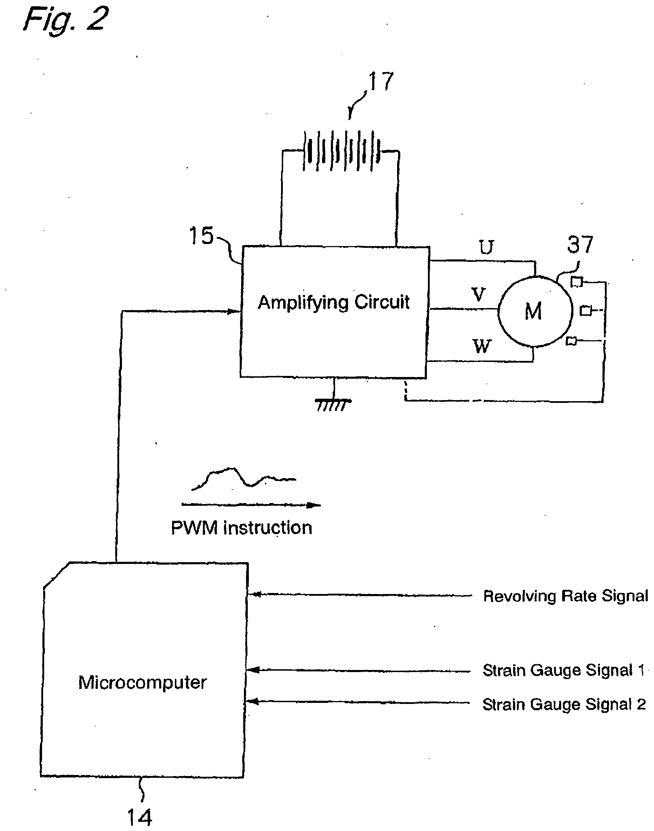

Fig. 2 illustrate schematically a control system of the power-assisted bicycle 1. The control system of the power-assisted bicycle 1 in this embodiment includes a single microcomputer 14 for providing an overall control on every electronic process across the bicycle, an electric motor 37 to which the PMW control is applicable, an amplifying circuit 15 directly connected to the microcomputer 14 for amplifying electric power of control signals therefrom and a battery 17 connected with the amplifying circuit 15 for power supplying to the electric motor 37.

The microcomputer 14 may have inputs consisting of, at least, a revolving rate signal for computing a traveling speed of the bicycle and strain gauge signals 1 and 2 for computing a pedaling force. Means for generating such signals will be discussed later. The microcomputer 14 executes the electronic operations, as it calculates the traveling speed and the pedaling force from those input signals and determines the assist ratio in accordance with a predetermined algorithm. The microcomputer 14 then outputs PWM instructions sequentially corresponding to the auxiliary motive power in order to instruct the electric motor 37 to generate the auxiliary motive power corresponding to the assist ratio.

Turning now to Figs. 3(a) and (b), the unit 11 serving as the power assisting mechanism in the power-assisted bicycle 1 will be discussed.

The unit 11 as shown in Figs. 3(a) and (b) comprises an assist-gear 30 coupled coaxially with the sprocket 2, the electric motor 37 for outputting an electromotive power and a gear mechanism 40 for transmitting the electromotive power from an output shaft 37a of the electric motor to the assist-gear 30 by way of a gear system. Accordingly, as the electric motor 37 is driven for revolutions, the torque therefrom is provided by way of the gear mechanism 40 to the assist-gear, which in turn transmits the torque to the sprocket 2, which is fixedly mounted with respect to the assist-gear 30 and rotated by the pedaling force. Thus, the force combining of the auxiliary motive power with the pedaling force can be accomplished.

The gear mechanism 40 comprises a first gear 38 which can operate associatively with the output shaft 37a of the electric motor 37, a second gear 42 for speed reduction which can mate with the first gear 38; and a third gear 45 which is coupled coaxially with the second gear 42 and can mate with the assist-gear 30.

It is to be noted that what is called a one-way clutch (not shown), designed to transmit a motive power only in one direction, is disposed intermediately on the transmission path of the auxiliary motive power from the electric motor 37 to the assist-gear 30. This one-way clutch is configured and connected so as to transmit the auxiliary motive power from the electric motor 37 to the assist-gear 30, but not to transmit any torque in the direction opposite thereto, or the direction from the assist-gear 30 to the electric motor 37. When the electric motor 37 is not in the revolutions, the rotational load from the motor could not be transmitted to the assist-gear 30 by the one-way clutch, as described above but not shown, meaning that the travelling with light strokes is achievable.

The sprocket 2, the assist-gear 30, the electric motor 37 and the gear mechanism 40 are all mounted on a common base 50. Additionally, the electric motor 37 and the whole assembly of gear mechanism 40 are securely fixed to the common base 50 so as not to be movable with respect thereto. Further, the electric motor 37 as well as the first and the second gears 38 and 42 of the gear mechanism 40 are covered with the drive housing 13. The drive housing 13 is joined to or formed integrally with the common base 50.

The sprocket 2 is mounted on the common base 50 to the drive shaft 4 via a one-way clutch 99 so as to be rotatable. The one-way clutch 99 can only transmit the rotational movement applied to the drive shaft 4 in the forward travelling direction to the sprocket 2, as will be described later. The drive shaft 4 is supported within the shaft housing 52 so as to be rotatable, and the shaft housing 52 is fixed to the body frame 80 as it is inserted in the shaft aperture 80 formed through the body frame. The shaft housing 52 is joined to or formed integrally with the common base 50.

The sprocket 2 and the assist-gear 30, in the case employing pins 123 (Fig. 3(a)), are coaxially coupled to each other at three locations apart by every 120 degrees. This allows the electromotive power transmitted to the assist-gear 30 is further transmitted via the pins 123 to the sprocket 2. The pins 123 are fitted as extending through the assist-gear 30 and the sprocket 2 in a direction of the thickness thereof, as shown in Fig. 3(b). In the examples as shown in Fig. 3(b), a leg portion of the pin 123 is inserted in an opening of the assist-gear 30 and fixed therein, while a head portion of the pin 123 extends through a hole formed through the sprocket 2, with a tip of the pin 123 having a larger diameter than that of the hole thereby preventing the pin from passing through the hole.

An elastic member 129 made of rubber or the like is further disposed around the head and shaft portions of the pin 123. Specifically, the elastic member is disposed in an engagement region between the sprocket 2 and the pin 123. With the provision of the elastic member, any bumpy behaviors of the assist-gear 30 or the sprocket 2 could be absorbed, so that the motive power can be transmitted very smoothly between the assist-gear 30 and the sprocket 2.

It is to be noted that the coupler means between the sprocket 2 and the assist-gear 30 would not be limited to the pin as illustrated herein. For example, a bolt may be used, or the leg portion of the pin 123 may be formed integrally with the assist-gear 30. Further, the elastic member 129 may be disposed on any locations on the motive power transmission path between the assist-gear 30 and the pin 123 and the sprocket 2. For example, a single or any additional elastic member(s) 129 may be disposed in the region(s), such as the engagement region between the assist-gear 30 and the pin 123.

Further, the assist gear 30 is mounted to the common base 50 for rotational movement via a bearing 70 independently from the sprocket 2. This arrangement facilitates further stable motive power transmission from the assist gear 30 to the sprocket 2.

As stated above, according to the illustrated embodiment, it becomes possible to construct a single unit 11 incorporated with all the components required for a power-assisted bicycle by mounting the sprocket 2, the assist-gear 30, the electric motor 37, the gear mechanism 40 and the drive shaft 4 on the common base 50, while mounting the circuit of the control system as shown in Fig. 2 and a pedaling sensor as will be described later in the drive housing 13 and inside the one-way clutch 99a, respectively. Therefore, the power assisting mechanism, as a whole unit in a simplified structure, can be accomplished and such a unit can facilitate the installation of the unit 11 to the body frame. It will be readily understood that the unit 11 can be fit for installation to any types of the body frame by modifying the common base adaptively.

Sequential steps of a procedure for installing a unit 11 according to the present invention to a bicycle body frame, with reference to Fig. 4. Fig. 4(a) shows a perspective view of the unit 11 having been installed to the bicycle body frame, as viewed from the right; Fig. 4(b) shows an enlarged view of the unit 11 as shown in Fig. 4(a); and Fig. 4(f) shows a perspective view of the unit having installed to the bicycle body frame, as viewed from the left, respectively.

Initially, the drive shaft 4 (as covered by the shaft housing 52) of the unit 11 is inserted from the one end of the shaft aperture 80 in the direction as indicated by the arrow, as shown in Fig. 4(c). Then, the unit 11 is further inserted, until the tips of the drive shaft 4 and the shaft housing 52 come out of the shaft aperture 80 in the opposite side, and a fitting 82 and a fastener 84 are fitted around the protruding tip portions, as shown in Fig. 4(d). Additionally, the unit 11 may be previously provided with a raised portion with bolt holes for threading engagement formed at both ends thereof, while the body frame may be provided previously with a pair of tabs having bolt holes formed therethrough, respectively, and extending in parallel, and in the step of Fig. 4(b), said raised portion may be positioned between said pair of tabs with bolt holes aligned.

Finally, the fastener 84 is fastened over the tip portions of the drive shaft 4 and the shaft housing 52 for fixed placement, while a tip portion of the fitting 82, which will be fastened concurrently with the fastener 84, is secured externally to the unit 11 by means of bolts, as shown in Fig. 4(c). Additionally, bolts are threaded into the bolt holes for threading engagement from both ends to fasten the raised portion placed between the pair of tabs. Thus, the unit 11 can be reliably and easily installed to the body frame.

### Pedaling force detection mechanism

A pedaling force detection mechanism for outputting strain gauge signals 1 and 2 to be input to the microcomputer 14 will be described with reference to Figs. 3 to 7. The pedaling force detection mechanism according to the illustrated embodiment can detect a strain that will vary in association with any deformation of the one-way clutch 99 in response to the pedaling force.

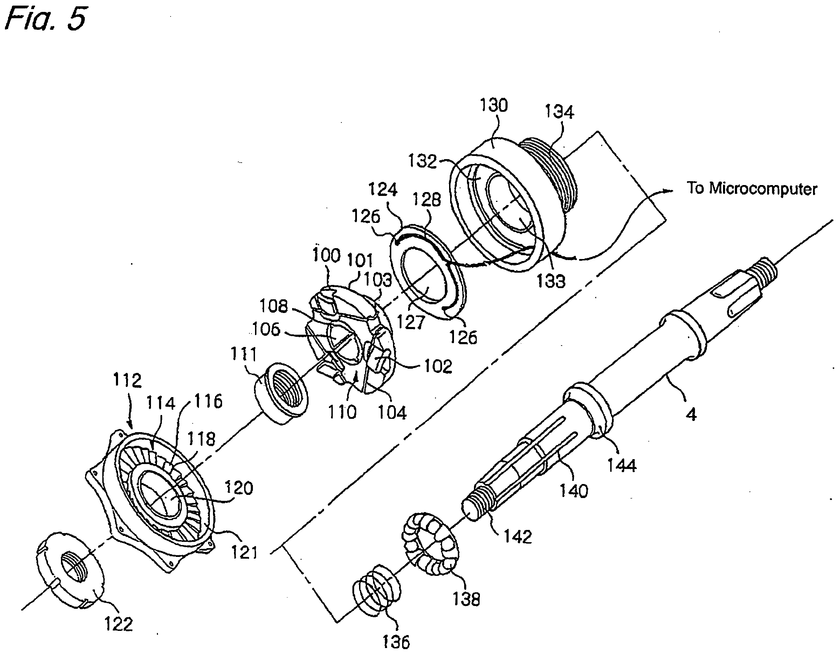

The sprocket 2 is supported on the drive shaft 4 via the one-way clutch 99, as shown in Fig. 3(b). The one-way clutch 99 comprises a pawl block 100 and a tooth block 112 as shown in Fig. 5.

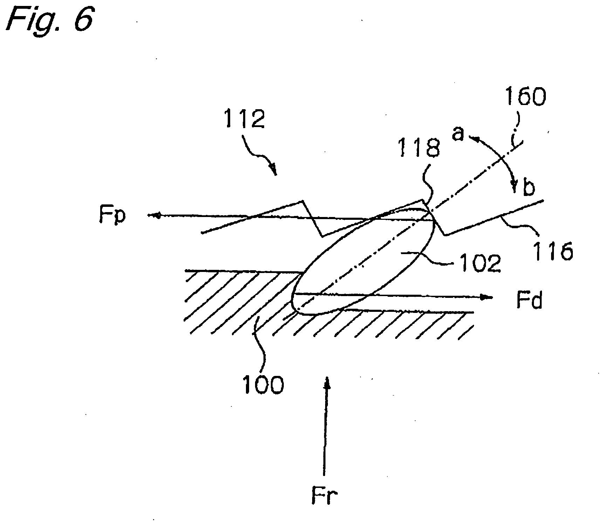

The pawl block 100 has three ratchet pawls 102 spaced to be equiangular along its circumferential direction in a second engaging surface 110 side thereof. This ratchet pawl 102 is made of rigid member and rotationally movable around an axis extending approximately along the diameter of the second engaging surface 110. The ratchet pawl 102 is biased by a pawl raising spring 104, so that the ratchet pawl 102, when free from any external force, rises up such that a length direction thereof makes a predetermined angle with respect to the second engaging surface 110 (in an equilibrium orientation 160 as seen in Fig. 6. As illustrated in Fig. 6, as the ratchet pawl 102 is deflected upward "a" or downward "b" from the equilibrium orientation 160, the pawl raising spring 104 applies a small elastic force to the ratchet pawl 102 to offset the bias to bring the pawl 102 back into the equilibrium orientation 160.

Additionally, a pawl block bore 106 is formed in a central region of the pawl block 100 for receiving the drive shaft 4, and this pawl block bore 106 extend further through a cylindrical portion 103 protruding from a back surface 101 of the pawl block 100. In the back surface 101, there is a circular groove 155 (Fig. 3(b)) formed in an outer periphery of the cylindrical portion 103 and a number of steel balls 152 are rotationally fitted in the circular groove 155. Those components associatively provide, in the back surface 101, a bearing mechanism serving for bearing a load in the axial direction as well as serving as a sliding bearing.

A coned disc spring 124 is mounted over the cylindrical portion 103 and into abutment with the back surface 101 of the pawl block 100 with the cylindrical portion 103 extending through a center bore 127 of the coned disc spring 124. As it is, the coned disc spring 124 is placed in slidable contact with the back surface 101 via the plurality of steel balls 152 or the load-bearing element in such a direction that the coned disc spring 124 can resist elastically against a pressure from the pawl block 100. A pair of strain gauges 126 is disposed on a surface of the coned disc spring 124, each at a location oppositely oriented by 180 degrees from each other in physical relationship. Those strain gauges 126 are electrically connected to the microcomputer 14 via leads 128. More preferably, three or greater number of strain gauges may be disposed on the coned disc spring 124. In this case, preferably, a plurality of strain gauges may be positioned in the rotationally symmetrical relationship to each other on the surface of the coned disc spring 124.

The coned disc spring 124 is housed in an inner bottom portion 132 of a bowl-shaped support 130. The supporter 130 includes a support bore 133 through which the drive shaft extends and a supporter cylindrical portion 134 protruding from the back surface thereof. This inner wall of the supporter cylindrical portion 134 is engaged with a bearing 138 (see Fig. 3(b)) serving for bearing both axial and radial loads, and the bearing 138 is locked by a stop ramp 144 formed in the drive shaft 4. Similarly, the drive shaft 4, in the opposite side, is mounted with a bearing 139 (see

Fig. 4(b)), and thus the drive shaft 4 can be rotatable with respect to the bicycle body.

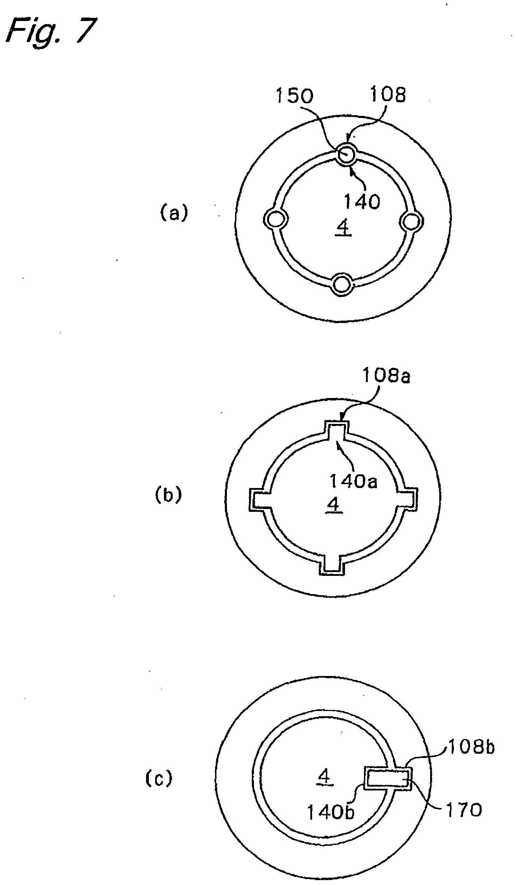

There are first anti-rotation grooves 108 formed at four locations in an inner wall of the pawl block bore 106 and extending in the axial direction 5. The drive shaft 4 includes second anti-rotation grooves 140 at four locations in an outer wall portion thereof, which is brought into sliding contact with the inner wall of the pawl block bore 106, such that the second anti-rotation grooves extend in the axial direction 5 so as to face to the first anti-rotation grooves 108. As seen in Fig. 7(a), the first anti-rotation groove 108 and the second anti-rotation groove 140 opposing thereto associatively define a cylindrical channel extending in the axial direction, in which a number of steel balls 150 are packed in and thus occupy the space inside the channel. This arrangement allows the pawl block 100 to be moved over the drive shaft 4 along the axial direction 5 with a minimum frictional resistance therebetween, while preventing a rotational movement of the pawl block relative to the drive shaft 4. This provides a type of ball spline, but other forms of ball spline, for example, a ball spline of endless rotation, may be applied as such a slidable anti-rotation means.

Other means than the ball spline as shown in Fig. 7(a) may be possibly used to attach the pawl block 100 to the drive shaft 4. For example, one structure, so called of key and spline type, composed of an axially extending protrusion 140a disposed on the drive shaft 4 and a third anti-rotation groove 108a formed in the pawl block 100 for accommodating said protrusion 140a as shown in Fig. 7(b) may be applicable for the anti-rotation means. It is to be noted that in Fig. 7(b), the protrusion 140a may be disposed on the pawl block 100 and the third anti-rotation groove 108a on the drive shaft 4. Further, another structure, so called of key and slot type, composed of an axially extending fourth anti-rotation groove 108b and an opposing fifth anti-rotation groove 140b formed in the pawl block 100 side and the drive shaft 4 side, respectively, and additionally a key plate fitted in a rectangular slot defined by those paired grooves as shown in Fig. 7(c) may be applicable for the anti-rotation means, as well.

A plurality of ratchet teeth 114 is formed in a first engaging surface 121 of the tooth block 112 for engagement with the ratchet pawls 102. The ratchet teeth 114 are composed of relatively abrupt ramps 118 and relatively moderate ramps 116 with respect to the first engaging surface 121, which are disposed alternately and periodically in the circumferential direction of said tooth block.

The tooth block 112 is supported over the drive shaft 4 via a collar 111 interposed therebetween in a manner that it can slidably contact to the drive shaft 4, with its first engaging surface 121 placed to face to the second engaging surface 110 of the pawl block 100. Then, the ratchet pawls 102 and the ratchet teeth 112 can be mated each other (Fig. 6). This means that the drive shaft 4 can be operatively coupled with the tooth block 112 exclusively via the engagement between the ratchet pawls 102 and the ratchet teeth 112. A washer 122 (Fig. 3(b)) is fitted over the end portion 142 of the drive shaft 4 having passed through a tooth block bore 120 via the collar 111 so as to prevent the tooth block 112 from being dislocated outwardly in the axial direction. The tooth block 112 is mounted with a sprocket 2 in a stationary manner via the pins 123 (Fig. 3(b)), and additionally, the tips of the drive shaft 4 are mounted with pedal shafts 146. The ratchet gear is thus completely assembled, which is operable to connect the drive shaft 4 with the sprocket 2 so as to transmit only the rotational movement by the pedaling force in the bicycle forward travelling direction to the sprocket 2.

Preferably, a spring 136 for offsetting may be interposed between the stop ramp 144 and the back surface 101 of the pawl block 100. This spring 136 for offsetting can bias the pawl block 100 in the axial direction so as to create some clearance between the steel balls 152 accommodated in the back surface 101 and the coned disc spring 124 when the pedaling force is under the predetermined value (for example, pedaling force substantially approximate to zero).

An operation of the pedaling force detection mechanism of the subject will be now described.

When a rider gives a pedaling force to the pedal 8R, 8L (Fig. 1) to cause the drive shaft 4 to rotate in the forward travelling direction of the bicycle body, this rotational force is transmitted to the pawl block 100 that is supported over the drive shaft 4 in a not-rotatable but slidable manner. In this operation, as shown in Fig. 6, since the ratchet pawl 102 is given a force Fd corresponding to the pedaling force from the pawl block 100, the tips of the pawls are brought into abutment with the relatively abrupt ramps 118 of the ratchet teeth of the tooth block 112, attempting to transmit the force to the ratchet teeth. Since the ratchet tooth block 112 is coupled to the sprocket 2, the tips of the ratchet pawls 102 are under affection of a force Fp caused by the load for driving from the relatively abrupt ramps 118. The ratchet pawls, as given the oppositely acting forces Fp and Fd from respective ends thereof, will rotate in the "a" direction to rise upward. At this time, the ratchet pawl block 100 tends to move in the axially inward direction due to the rising of the ratchet pawls 102, so as to push in the coned disc spring 124 interposed between the pawl block 100 and the supporter 130. The coned disc spring 124, in resistance against this action, will produce an elastic force Fr to act on the pawl block 100. This force Fr and the force reflecting the pedaling force causing the axial displacement of the pawl block 100 can reach equilibrium in a short time. Thus, the strain accompanied with stress of the coned disc spring 124, the clearance between the pawl block 100 and the tooth block 112, the angle of the ratchet pawl 102 with respect to the second engaging surface 110, the position of the pawl block 100 with respect to the body frame, and the pressure applied to push in the coned disc spring 124 can provide physical quantities reflecting the pedaling force. Accordingly, it will become possible to estimate the pedaling force T by detecting at least one of those physical quantities.

In this illustrated embodiment, the strain of the coned disc spring 124 is taken as an example for detection. The microcomputer 14 executes a summing operation (including an averaging operation) over the signals from two strain gauges 126 disposed in the coned disc spring 124. In this way, owing to the manner of the measurement in which the strains taken at a plurality of locations are averaged for measurement, a wider range of variation will be available for the same quantity of pedaling force and also the noise components can be smoothed, so that the SN ratio will be improved and thus the accuracy in pedaling force estimation will be further increased. This effect will be greater proportionally, as the number of strain gauges increases.

Further, in an event, such as the pedaling force not greater than the predetermined value, the spring 136 for offsetting should have created a clearance between the back surface 101 of the pawl block 100 and the coned disc spring 124, contributing to lessening the frequency of the steel balls 152 bumping against the coned disc spring 124. This reduces the noise components in the strain gauge signals so as to improve the stability in pedaling force detection and power-assisting control.

In next step, the microcomputer 14 calculates, based on at least the calculated pedaling force T, an auxiliary motive power Te to be applied for assistance, and then computationally outputs a control signal to instruct the electric motor 37 to drive itself to make revolutions for the auxiliary motive power. Preferably, the microcomputer 14 may convert a revolving rate signal detected by a revolving rate sensor 220 to a bicycle speed, determines an appropriate auxiliary motive power Te based on both of the pedaling force T and the bicycle speed, and controls the electric motor 37 to generate the determined auxiliary motive power Te.

The pedaling force detection mechanism of the illustrated embodiment can further provide the remarkable effects as follows.
(1) Since the one-way clutch and the pedaling force detection mechanism are implemented in a single mechanism, therefore the number of required parts will be reduced and thus fabrication of much smaller and lighter unit as well as with a lower cost can be accomplished.
(2) Since the coned disc spring is used for a section serving for detecting a pedaling force, which is fabricated as an integral unit of a load bearing unit and a load detection sensor so as to achieve two functions by means of a single unit, therefore, in addition to the above effect, further reduction in size, weight and production cost of the unit can be accomplished.
(3) Since the smaller, lighter and more simplified construction level of the pedaling force detection mechanism can be accomplished as stated in above articles (1) and (2), even an ordinary bicycle may be given an extensive possibility of having the pedaling force detection mechanism that will be advantageously mounted thereon.
(4) From the reasons as stated in above articles (1) and (2), in comparison to the mechanism by the prior art, transmission loss of the load may be reduced, so that the power-assist feeling of excellent responsive performance in the control can be achieved.
(5) From the reasons as stated above articles (1) and (2), in comparison with the prior art mechanism (using a coil spring), any unnecessary pedaling work (until the detection by the sensor) will be eliminated, and so in the above example, the rider, when he/she steps and press on the pedals, may have the same feeling as he/she should have with an ordinary bicycle, while in contrast the rider may experience an elastic pedal feeling, when stepping and pressing on the pedals of the bicycle of the prior art.

It is to be noted that which one of the pawls or the teeth of the one-way clutch 99 is disposed on the sprocket with the other disposed on the drive shaft may be appropriately modified as desired. For example, the pawl block 100 may be mounted on the sprocket, while the tooth block 112 is mounted on the drive shaft 4 so as to be slidable but not rotatable, in which the tooth block 112 may push the coned disc spring 124 in place.

Further, although the strain of the coned disc spring is taken as the physical quantity to be detected in association with the pedaling force, the present invention is not limited to that, any other physical quantities that can vary in response to the deformation of the one-way clutch 99 caused by the pedaling force can be taken for detection. For example, a tilt of the ratchet pawl, a relative spacing between the ratchet pawl block and the ratchet tooth block, a position of either of the ratchet pawl block and the ratchet tooth block with respect to the bicycle body, as well as a pressure against the coned disc spring may be chosen as the physical quantity that can reflect the pedaling force.

In addition, the type and shape of the elastic component to be disposed in resistance against the deformation of the one-way clutch 99 may be preferably modified, as desired. For example, an elastomeric component, other than the coned disc spring or the coil spring, may be used. Further, although the strain gauge is taken as the example for a means for detecting the strain, the present invention is not limited to that, but any other means by which the physical quantity in association with the strain can be detected may be used.

The present invention has been described above in the description of the embodiment, which is not intended to limit the present invention, but rather the present invention may be preferably modified, as desired, within the scope of the concept of the same.

## Claims

1. A unit (11) for a power-assisted bicycle attachable to a bicycle body frame, comprising at least:
a sprocket (2) which is rotatable to transmit a pedaling force to a driving wheel (22);
an electromotive power output means (37) for providing an electromotive power to supplement a pedaling force to be output from an output shaft (37a) thereof;
a gear mechanism (40) coupled to said output shaft (37a) and comprising a first gear (38) which can operate associatively with said output shaft (37a) of said electromotive power output means (37) ;
a second gear (42) for speed reduction which can mate with said first gear (38); and
a third gear which is coupled coaxially with said second gear (42) and can mate with said assist-gear (30);
an assist-gear (30) mated with the third gear of said gear mechanism (40) and coupled to said output shaft of said electromotive power output means via the gear mechanism; and a coupler means (123) for coupling said assist-gear (30) coaxially with said sprocket (2), all of which components being arranged on a common base (50), wherein:
said electromotive power output means (37) and said gear mechanism (40) are fixedly mounted on said common base (50), whereas said sprocket (2) and said assist-gear (30) are rotationally mounted to said common base (50);
said electromotive power output means (37) and at least a part of said gear mechanism (40) are accommodated in a housing (13), said housing (13) being joined to or formed integrally with said common base (50),
wherein said coupler means (123) is a pin or bolt fitted as extending through said assist-gear (30) and said sprocket (2) in a direction of the thickness thereof.

2. A unit in accordance with claim 1, comprising an elastic member (127) disposed intermediately on a motive power transmission path of said assist-gear (30), said coupler means (123) and said sprocket (2).

3. A unit in accordance with claim 1, in which said elastic member (127) is disposed at an engagement region where at least either one of said sprocket (2) and said assist-gear (30) can engage with said pin (123).

4. A unit in accordance with any one of claims 1 to 3, in which said assist-gear (30) is supported for rotational movement via a bearing (70) independently from said sprocket (2).

5. A unit in accordance with claim 1, further comprising a drive shaft (4) which can rotate by application of said pedaling force, wherein
said drive shaft (4) is supported on said common base (50) for rotational movement.

6. A unit in accordance with claim 5, in which said drive shaft (4) is accommodated in a shaft housing (52), said shaft housing (52) being joined to or formed integrally with said common base (50) .

7. A unit in accordance with claim 6, in which said shaft housing (52) is configured to be inserted into a shaft aperture (80) formed in said bicycle body frame.

8. A unit in accordance with any one of claims 5 to 7, in which said sprocket (2) is mounted to said drive shaft (4) via a one-way clutch (99), said one-way clutch (99) operable to transmit only a rotational movement in one direction by a pedaling force applied to said drive shaft (4) to said sprocket (2).

9. A unit in accordance with claim 8, further comprising:
a detection means (126) for determining a physical quantity for said one-way clutch (99) varying in response to said pedaling force, and
a control means (14) for controlling said electromotive power based on at least said physical quantity determined by said detection means (126).

10. A unit in accordance with claim 1, further comprising on said common base (50):
a drive shaft (4);
a shaft housing (52) accommodating said drive shaft (4); and
a one-way clutch (99) interposed between said drive shaft (4) and said sprocket (2),
wherein said unit (11) is configured to be attached to the bicycle body frame with said shaft housing (52) being inserted into a shaft aperture (80) formed in the bicycle body frame.

11. A power-assisted bicycle (1), to which the unit (11) in accordance with any one of claims 1 to 10 is attached.

## Patentansprüche

1. Einheit (11) für ein leistungsunterstütztes Fahrrad, die an einen Fahrradkörperrahmen anbringbar ist, umfassend mindestens:
ein drehbares Ritzel (2) zum Übertragen einer Pedalkraft an ein Antriebsrad (22);
ein elektromotorisches Leistungsausgabemittel (37) zum Bereitstellen einer elektromotorischen Leistung, um eine Pedalkraft zu ergänzen, die von einer Ausgangswelle (37a) davon auszugeben ist;
einen Zahnradmechanismus (40), welcher mit der Ausgangswelle (37a) gekoppelt ist und umfasst
ein erstes Zahnrad (38), das assoziativ mit der Ausgangswelle (37a) des elektromotorischen Leistungsausgabemittels (37) betreibbar ist;
ein zweites Zahnrad (42) zur Geschwindigkeitsreduzierung, welches mit dem ersten Zahnrad (38) in Eingriff bringbar ist; und
ein drittes Zahnrad, welches koaxial mit dem zweiten Zahnrad (42) gekoppelt ist und mit dem Unterstützungszahnrad (30) in Eingriff kommen kann,
ein Unterstützungszahnrad (30), das mit dem dritten Zahnrad des Zahnradmechanismus (40) ineinander greift und über den Zahnradmechanismus mit der Ausgangswelle des elektromotorischen Leistungsausgabemittels gekoppelt ist;
und ein Kopplungsmittel (123) zum koaxialen Koppeln des Unterstützungszahnrads (30) mit dem Ritzel (2), wobei all diese Komponenten auf einer gemeinsamen Basis (50) angeordnet sind, wobei:
das elektromotorische Leistungsausgabemittel (37) und der Zahnradmechanismus (40) fest an der gemeinsamen Basis (50) befestigt sind, wohingegen das Ritzel (2) und das Unterstützungszahnrad (30) drehbar an der gemeinsamen Basis (50) befestigt sind;
das elektromotorische Leistungsausgabemittel (37) und mindestens ein Teil des Zahnradmechanismus (40) in einem Gehäuse (13) aufgenommen sind, wobei das Gehäuse (13) mit der gemeinsamen Basis (50) verbunden ist oder ganzheitlich mit dieser ausgebildet ist,
wobei das Kopplungsmittel (123) ein stift- oder bolzeneingepasstes ist, welches sich durch das Unterstützungszahnrad (30) und das Ritzel (2) in eine Richtung der Dicke davon erstreckt.

2. Einheit nach Anspruch 1, umfassend ein elastisches Element (127), welches auf einem motorischen Leistungsübertragungspfad des Unterstützungszahnrads (30), des Kopplungsmittels (123) und des Ritzels (2) dazwischen angeordnet ist.

3. Einheit nach Anspruch 1, in welcher das elastische Element (127) an einer Eingriffsregion angeordnet ist, an der mindestens eines aus dem Ritzel (2) und dem Unterstützungszahnrad (30) mit dem Stift (123) ineinander greifen kann.

4. Einheit nach einem der Ansprüche 1 bis 3, in welcher das Unterstützungszahnrad (30) zur rotatorischen Bewegung über ein Lager (70) unabhängig von dem Ritzel (2) gelagert ist.

5. Einheit nach Anspruch 1, weiter eine Antriebswelle (4) umfassend, die durch Anlegen der Pedalkraft rotierbar ist, wobei
die Antriebswelle (4) zum rotatorischen Bewegen an der gemeinsamen Basis (50) gelagert ist.

6. Einheit nach Anspruch 5, in welcher die Antriebswelle (4) in einem Wellengehäuse (52) aufgenommen ist, wobei das Wellengehäuse (52) mit der gemeinsamen Basis (50) verbunden ist oder ganzheitlich mit dieser ausgestaltet ist.

7. Einheit nach Anspruch 6, in welcher das Wellengehäuse (52) ausgestaltet ist, in eine Wellenöffnung (80), die in dem Fahrradkörperrahmen ausgebildet ist, eingeführt zu werden.

8. Einheit nach einem der Ansprüche 5 bis 7, in welcher das Ritzel (2) über eine Ein-Wege-Kupplung (99) an der Antriebswelle (4) befestigt ist, wobei die Ein-Wege-Kupplung (99) so betreibbar ist, dass nur eine Rotationsbewegung in eine Richtung durch eine an die Antriebswelle (4) angelegte Pedalkraft an das Ritzel (2) übertragen wird.

9. Einheit nach Anspruch 8, weiter umfassend:
ein Detektionsmittel (126) zum Bestimmen einer physikalischen Größe für die Ein-Wege-Kupplung (99), die sich in Abhängigkeit der Pedalkraft verändert, und
ein Steuerungsmittel (14) zum Steuern der elektromotorischen Leistung auf Basis von mindestens der physikalischen Größe, welche durch das Detektionsmittel (126) bestimmt wird.

10. Einheit nach Anspruch 1, auf der gemeinsamen Basis (50) weiter umfassend:
eine Antriebswelle (4);
ein Wellengehäuse (52), welches die Antriebswelle (4) aufnimmt; und
eine Ein-Wege-Kupplung (99), welche zwischen die Antriebswelle (4) und das Ritzel (2) eingeführt ist,
wobei die Einheit (11) ausgestaltet ist, mit dem Wellengehäuse (52), welches in eine Wellenöffnung (80) eingeführt ist, die in dem Fahrradkörperrahmen ausgebildet ist, an dem Fahrradkörperrahmen angebracht zu werden.

11. Leistungsunterstütztes Fahrrad (1), an welches die Einheit (11) nach einem der Ansprüche 1 bis 10 angebracht ist.

## Revendications

1. Unité (11) pour une bicyclette assistée électriquement pouvant être fixée au cadre de la bicyclette, comprenant au moins :
un pignon (2) apte à tourner pour transmettre une force de pédalage à une roue d'entraînement (22) ;
un moyen d'émission de puissance électromotrice (37) pour fournir une puissance électromotrice comme supplément à une force de pédalage à émettre d'un arbre de sortie (37a) de celui-ci ;
un mécanisme d'engrenage (40) couplé audit arbre de sortie (37a) et comprenant une première roue dentée (38) qui peut fonctionner en association avec ledit arbre de sortie (37a) dudit moyen de sortie de puissance électromotrice (37) ; une deuxième roue dentée (42) pour la réduction de la vitesse apte à s'apparier avec ladite première roue dentée (38) ; et une troisième roue dentée qui est couplée coaxialement à ladite deuxième roue dentée (42) et qui peut s'apparier avec ledit engrenage d'assistance (30) ; un engrenage d'assistance (30) apparié à la troisième roue dentée dudit mécanisme d'engrenage (40) couplé audit arbre de sortie dudit moyen de sortie de puissance électromotrice via le mécanisme d'engrenage ; et un moyen de couplage (123) pour coupler ledit engrenage d'assistance (30) coaxialement avec ledit pignon (2), tous lesdits composants étant agencés sur une base commune (50), dans laquelle :
ledit moyen de sortie de puissance électromotrice (37) et ledit mécanisme d'engrenage (40) sont montés fixement sur ladite base commune (50), tandis que ledit pignon (2) et ledit engrenage d'assistance (30) sont montés à rotation sur ladite base commune (50) ;
ledit moyen de sortie de puissance électromotrice (37) et au moins une partie dudit mécanisme d'engrenage (40) sont logés dans un boîtier (13), ledit boîtier (13) étant joint à ou formé intégralement avec ladite base commune (50),
dans lequel ledit moyen de couplage (123) est un axe ou un boulon ajusté comme s'étendant à travers ledit engrenage d'assistance (30) et ledit pignon (2) dans le sens de son épaisseur.

2. Unité selon la revendication 1, comprenant un élément élastique (127) disposé d'une manière intermédiaire sur un chemin de transmission de puissance motrice dudit engrenage d'assistance (30), dudit moyen de couplage (123) et dudit pignon (2).

3. Unité selon la revendication 1, dans laquelle ledit élément élastique (127) est disposé dans une région d'engagement où au moins l'un quelconque parmi ledit pignon (2) et ledit engrenage d'assistance (30) peut venir en prise avec ledit axe (123).

4. Unité selon l'une quelconque des revendications 1 à 3, dans laquelle ledit engrenage d'assistance (30) est supporté pour un mouvement de rotation via un palier (70) indépendamment dudit pignon (2).

5. Unité selon la revendication 1, comprenant en outre un arbre d'entraînement (4) apte à tourner sous l'application de ladite force de pédalage, où ledit arbre d'entraînement (4) est supporté sur ladite base commune (50) pour un mouvement de rotation.

6. Unité selon la revendication 5, dans laquelle ledit arbre d'entraînement (4) est logé dans un boîtier d'arbre (52), ledit boîtier d'arbre (52) étant joint ou formé intégralement avec ladite base commune (50).

7. Unité selon la revendication 6, dans laquelle ledit boîtier d'arbre (52) est configuré pour être inséré dans une ouverture d'arbre (80) ménagée dans ledit cadre de bicyclette.

8. Unité selon l'une quelconque des revendications 5 à 7, dans laquelle ledit pignon (2) est monté sur ledit arbre d'entraînement (4) par un embrayage à une voie (99), ledit embrayage à une voie (99) étant actionnable pour transmettre seulement un mouvement de rotation dans une direction par une force de pédalage appliquée audit arbre d'entraînement (4) audit pignon (2).

9. Unité selon la revendication 8, comprenant en outre :
un moyen de détection (126) pour déterminer une quantité physique pour ledit embrayage à une voie (99) variant en réponse à ladite force de pédalage, et
un moyen de commande (14) pour commander ladite puissance électromotrice basée sur au moins ladite quantité physique déterminée par ledit moyen de détection (126).

10. Unité selon la revendication 1, comprenant en outre sur ladite base commune (50) :
un arbre d'entraînement (4) ;
un boîtier d'arbre (52) logeant ledit arbre d'entraînement (4) ; et
un embrayage à une voie (99) interposé entre ledit arbre d'entraînement (4) et ledit pignon (2),
où ladite unité (11) est configurée pour être fixée au cadre de la bicyclette, ledit boîtier d'arbre (52) étant inséré dans une ouverture d'arbre (80) ménagée dans le cadre de la bicyclette.

11. Bicyclette assistée électriquement (1), à laquelle l'unité (11) selon l'une quelconque des revendications 1 à 10 est fixée.
